# EUROPEAN PATENT APPLICATION

(11) **EP 4 470 665 A1**
(43) Date of publication of application: **04.12.2024**
(21) Application number: 23382528.0
(22) Date of filing: 01.06.2023
(51) Int. Cl.: B01J 20/04, B01J 20/06, C02F 1/28, C02F 1/42, C02F 1/469, C02F 1/461

(54) **DEVICE FOR WATER AND AIR DECONTAMINATION AND DISINFECTION**

(71) Applicant: Universitat Politècnica De Catalunya, 08034 Barcelona (ES); Consejo Superior de Investigaciones Cientificas, 28006 Madrid (ES)
(72) Inventor: BERMEJO BROTO, Alexandra, 08034 Barcelona (ES); BRAGÓS BARDIA, Ramon, 08034 Barcelona (ES); LACORTE BRUGUERA, Silvia, 08034 Barcelona (ES)
(74) Representative: Torner, Juncosa I Associats, SL

(57) **Abstract**

A device for water and air decontamination and disinfection is proposed. The device comprises a three-dimensional structure (10) made of ceramic material and having a tuned topology comprising air voids (11) of a given size and arranged following a given distribution; one or more sorbents (12) embedded within the three-dimensional structure (10), mixed with the air voids (11), and adapted to chemically functionalize the three-dimensional structure (10); and electrodes (13) configured to operate as heaters to apply a thermal process to contaminants absorbed by the three-dimensional structure (10) and/or to operate as sensors to perform real-time electrical measurements on the contaminants absorbed by the three-dimensional structure (10).

## Description

### Technical Field

The present invention relates to a device for water and air decontamination and disinfection. The device is able to detect, retain and eliminate contaminants present in water and air such as organic micropollutants (OMP), micro- and/or nano-plastics, and microbial pathogens.

### Background of the Invention

Air pollution, poor water quality and exposure to OMP are critical drivers for human mortality and health problems, according to the European Environment Agency. Synthetic chemicals such as solvents, detergents, pesticides, plasticizers, pharmaceutical and personal care products, paraffins, etc. are hazardous to the environment and human health, contributing to increased cancer rates, asthma, endocrine disruption, adverse effects on reproduction, obesity and neurological problems. OMP, microplastics and associated plastic additives emerge as new environmental hazards especially in indoor environments associated to the "sick building syndrome". In addition, water and airborne diseases of viral and bacterial origin are a source of health and economic problems, as evidenced by the COVID-19 pandemic.

At present, the elimination of OMP, microplastics and microbial pathogens from water rely on advanced oxidation processes based on either ozone, hydrogen peroxide and ultraviolet (UV) light or a combination of the above [1, 2]. Other water treatments are based on membrane filters made of polymeric or inorganic materials that operate under positive or vacuum pressure and are prone to membrane fouling and clogging and have limited operating life-cycle as retained OMP and MbP are not eliminated *in-situ,* but rather removed following a costly and time-consuming *ex-situ* backwashing process [3]. Other ceramic membranes such as TiO₂/Al₂O₃, hydroxylated anatase TiO₂ or graphene oxide-TiO₂ composites [4] enhance the elimination of OMP by photocatalysis, Fenton oxidation and electrocatalytic oxidation [5], photoelectrocatalysis [6] but suffer similar limitations since they are based on filtration systems. Regarding water disinfection, microfiltration, ultrafiltration and nanofiltration reach 0.3-2.2 log removal values, > 3 log and > 5, respectively, although higher values can be obtained with microfiltration membranes coated with polyethylenimine or polyelectrolyte multilayers or with ultrafiltration membranes having lamellar nanochannels. Although membranes are effective for OMP removal and are widely used, they have high installation and operational costs and lack the versatility needed for at-source treatment. Technologies to eliminate MP at source do not exist. For air, in-duct air cleaning via filtration is the only way of eliminating fine particles efficiently, while it is not effective against microbial burden, especially against viruses [7]. Disinfection is generally carried out by UV irradiation, an established and straightforward technique. However, it faces limitations in its usage in occupied rooms due to safety concerns, decreased radiation with distance, the toxicity of the materials used in UV lamps and their short lifetime [8]. Recent history has shown that there are no technologies to eliminate pathogens and that improvements need to be made to ensure the safeness of water and air and combat epidemics efficiently.

Regarding the monitoring of OMP in water and air, most methods rely upon punctual measurement using mass-spectrometric based techniques, including high resolution mass spectrometry for retrospective screening [9]. While these methods allow multiresidue analysis and provide comprehensible information regarding the chemical status of water, they cannot be used continuously because of their complexity and operational expenses [10]. Sensors for water monitoring have been developed for online monitoring but typically only measure flow, temperature, pH, conductivity, and redox potential [11]. Sensors for metal, organic contaminants and microbial pathogens [12], and more recently Electrochemical Impedance Spectroscopy [13] and intrinsic fluorescence for microbial contamination [14] have been proposed as real-time devices that act as ideal early warning systems [15]. Regarding air monitoring, most efforts have focused on analyzing particulate matter and gas emissions to meet EU Directive 2008/50/EU [16], but no methods exist to monitor indoor air quality to control exposure to contaminants or pathogens at the working place.

With the aim to protect human health and ensure the safeness and quality of drinking water and indoor air, new technologies are needed for decontamination and disinfection of water and air.

### References:

[1] Von Gunten. 'Micropollutant oxidation studied by quantum chemical computations: methodology and applications to thermodynamics, kinetics, and reaction mechanisms' Environ Sci Technol 2018, 52, 5062
[2] Giwa, Process Safe Environ Protect 2021, 146, 220
[3] Yang, 'A Review on Reverse Osmosis and Nanofiltration Membranes for Water Purification' Polymers 2019, 11, 1252
[4] Leong J Membrane, 'TiO2 based photocatalytic membranes: A review', Sci 2014, 472, 167
[5] Li, J, 'Catalytic membrane-based oxidation-filtration systems for organic wastewater purification: A review', Haz Mat 2021, 414, 125478
[6] Orimolade, J, 'Enhanced photoelectrocatalytic degradation of diclofenac sodium using a system of Ag-BiVO4/BiOl anode and Ag-BiOl cathode', Electroanal Chem 2020, 878
[7] Timóteo, Environ Chem Letters 2020 18, 1113
[8] Raeiszadeh, 'A Critical Review on Ultraviolet Disinfection Systems against COVID-19 Outbreak: Applicability, Validation, and Safety Considerations', Photonics 2020, 7, 2941
[9] Slobodnik J. 'High-resolution mass spectrometry to complement monitoring and track emerging chemicals and pollution trends in European water resources', Environ Sci Eur 31(2019)
[10] Brack W. 'Towards the review of the European Union Water Framework Directive: Recommendations for more efficient assessment and management of chemical contamination in European surface water resources', Sci Total Environ 576 (2017)
[11] Cloete N. 'Design of Smart Sensors for Real-Time Water Quality Monitoring', IEEE Acces, 4 (2016)
[12] Zulkifli SN. 'Detection of contaminants in water supply: A review on state-of-the-art monitoring technologies and their applications', Sensors and Actuators B: Chemical 255 (2018)
[13] Torres H. Intern J Engineer Res & Technol 8 (2019)
[14] Kilungo AP. 'Continuous Real-time Detection of Microbial Contamination in Water using Intrinsic Fluorescence', J Biosens Bioelectron, S12 (2013)
[15] Lambrou T P. `A Low-Cost Sensor Network for Real-Time Monitoring and Contamination Detection in Drinking Water Distribution Systems' IEEE Sensors J 14 (2014)
[16] Directive 2008/50/EU on air quality (2008)

### Description of the Invention

The object of present invention is thus to provide a new functionalized ceramic device for the real-time sensing and elimination of water and air contaminants including any kind of OMP, micro- and/or nano-plastics, microbial pathogens, etc. A smart three-dimensional chemically functionalized porous structure is built-in with electrodes to enable real-time electrical measurements for the detection of the deposited contaminant load and to apply thermal shots to achieve complete thermal elimination of organic contaminants and microplastics in a self-cleaning procedure.

The present invention can be applied for the analysis and elimination of organic micropollutants (comprising pharmaceuticals, industrial chemicals, pesticides and endocrine disruptors) microplastics and microbial pathogens in water and indoor air.

To that end, the present invention proposes, according to one aspect, a device for water and air decontamination and disinfection, the device comprising a three-dimensional porous structure made of ceramic material and having a tuned topology comprising air voids of a given size and arranged following a given distribution; one or more sorbents embedded within the three-dimensional porous structure and adapted to chemically functionalize the three-dimensional porous structure; and an electrode arrangement comprising one or more types of electrodes to operate as sensors to perform real-time electrical measurements on the contaminants absorbed by the three-dimensional porous structure and to operate as heaters to apply a thermal process to eliminate the contaminants absorbed by the three-dimensional porous structure.

In some embodiments, the electrode arrangement is disposed embedded within the three-dimensional structure following an interdigitated comb configuration in combination with a serpentine.

Alternatively, in other embodiments, the electrode arrangement is disposed on at least two surfaces of the three-dimensional porous structure following a sandwich configuration.

The electrodes are made of a temperature-resistant metal material such as nickel, copper, alloys, etc.

In some embodiments, the air voids comprise different pore volumes, surface area and dimensions.

In some embodiments, the air voids are of micro and/or nano size.

In some embodiments, the air voids are periodically distributed along the three-dimensional porous structure following an ordered arrangement.

According to the invention, the ceramic material can comprise Aluminum Oxide, Titanium Oxide, Zinc Oxide, Zirconia, Silicone Dioxide or Carbide, or combinations thereof, among others.

Moreover, the sorbent(s) can comprise reverse phase polymeric sorbents including hydrophilic-lipophilic-balanced N-vinylpyrrolidone and divinylbenzene; polymerically bonded, octadecyl (18% C); monomerically bonded, cyanopropyl (7% C); mixed-mode polymeric sorbents including strong cation exchange, SCX; strong anion exchange, SAX; weak cation exchange, WCX; weak anion exchange, WAX; and/or strong anion exchange or quaternary amines, chitosan, or graphene.

In some embodiments, the real-time electrical measurements comprise real-time electrical impedance spectroscopy (EIS) measurements, such that patterns identified in the electrical impedance spectra and their evolution with the temperature allow identifying a content of the contaminants and check its elimination.

In some embodiments, the sorbents comprise different retention properties allowing the sorption of contaminants of different physico-chemical properties.

In some embodiments, the three-dimensional porous structure is configured to form surface spike configurations.

In some embodiments, the device also has a temperature-resistant support configured to sustain the three-dimensional porous structure.

The proposed device is modular, versatile, autonomous, effective, reusable, and energetically efficient. It is intended to be used in water and air appliances to minimize the release of contaminants, microplastics and microbial pathogens to the environment and the exposure to toxic substances in indoor areas.

Some of the advantages of the present invention are:
- Sorption efficiency
- Selectivity
- Capacity
- Versatility
- Durability and reusability
- Autonomy
- Adequacy to existing regulations
- Applicability to several fields, e.g.
   i. Elimination of microplastics from washing machines
   ii. Elimination of pharmaceuticals from wastewaters from hospitals and houses for the elderly
   iii. Advanced treatment of reclaimed water
   iv. Treatment of industrial effluents
   v. Elimination of contaminants in closed cycles to allow water reuse
   vi. Elimination of pesticides from helicopter of truck washing tanks (after pesticide spraying).

### Brief Description of the Drawings

The previous and other advantages and features will be more fully understood from the following detailed description of embodiments, with reference to the attached figures, which must be considered in an illustrative and non-limiting manner, in which:
Fig. 1 shows a device for water and air decontamination and disinfection, according to an embodiment of the present invention.
Fig. 2 shows another device for water and air decontamination and disinfection, according to another embodiment of the present invention.
Fig. 3 schematically illustrates an example of the functionalized ceramic porous structure when trapping (a), detecting (b) and eliminating (c), by thermal degradation, contaminants from water and air.
Fig. 4 graphically illustrates the fabrication method for obtaining the proposed device, according to an embodiment.

### Detailed Description of the Invention and of Preferred Embodiments

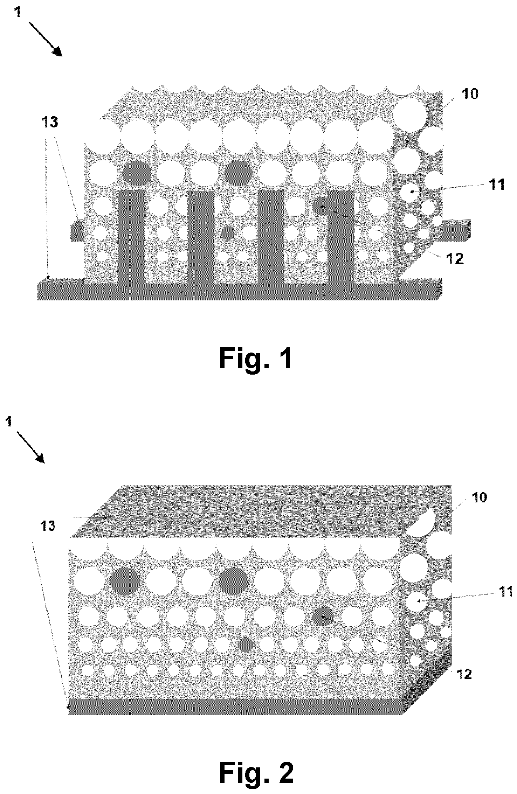

With reference to Figs. 1 and 2, therein two embodiments of the proposed device 1 are shown. In any of these embodiments, the whole device 1 can be shaped in different dimensions, use different sorbents and have different structural properties, and can be scaled-up by combining individual units into larger arrays, according to final deployment needs and conditions. The device 1 can be used limitless times. In summary, the proposed device 1 conforms a smart reusable sensor and actuator with capabilities of eliminating contaminants in air and water.

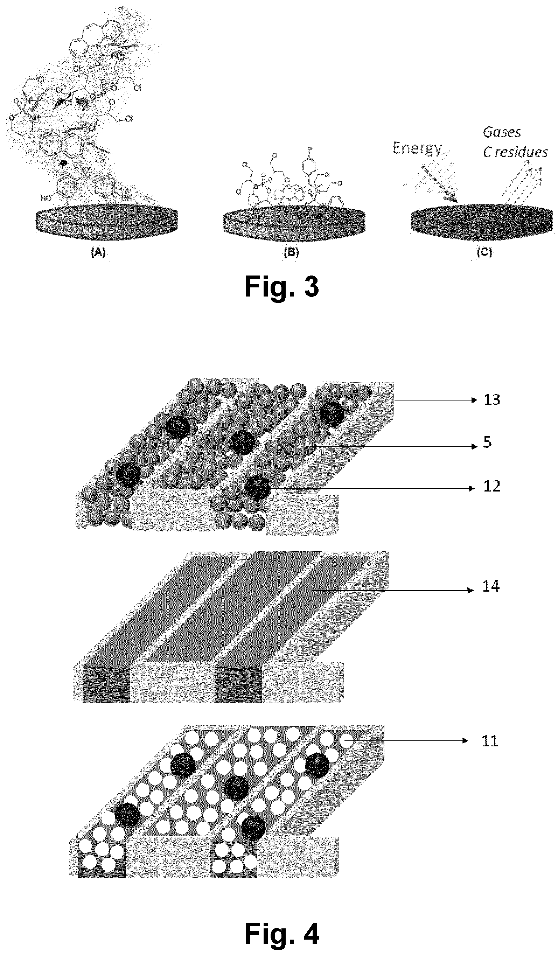

The proposed device 1 relies on a temperature-resistant three-dimensional porous structure 10 with accurately tuned/tailored pore size distributions that is able to trap, detect and thermally eliminate any kind of OMP, micro- or nano- plastic and microbial pathogens (Fig. 3).

The three-dimensional porous structure 10 is made of ceramic material such as Aluminum Oxide, Titanium Oxide, Zinc Oxide, Zirconia, Silicone Dioxide or Carbide, or combinations thereof. Likewise, the three-dimensional porous structure 10 comprises spheric air gaps (voids) 11, particularly of micro- and/or nano-size. The size and distribution of the air voids 11 can be designed and engineered at will inside the three-dimensional porous structure 10. In the embodiments of Figs. 1 and 2, the voids 11 show a periodic distribution. This, joined with the freedom of choosing a specific size of the voids 11, allows trapping the various contaminants in different environmental matrices (water, air). The periodic character of the three-dimensional porous structure 10 also confers it photonic properties which allows performing an optical analysis thereof. This allows obtaining real-time information by analyzing the reflectance or transmittance spectrum of the device 1.

In some embodiments, the three-dimensional porous structure 10 can be chemically engineered with nano-spikes so that microplastic fibers and fragments, can be electromechanically retained. Determining the complex adsorption process is crucial to understanding the hydro- and aerodynamic trapping forces (and resulting adsorption kinetics) as a function of the flow operational modes, physico-chemical interactions and water/air characteristics to enhance the retention efficiency while avoiding clogging or fouling over the porous structure 10.

As seen in Figs. 1 and 2, the three-dimensional porous structure 10 is functionalized with sorbents 12, for instance, polymeric, ion-exchange or mixed-mode sorbents, graphene, Chitosan, activated carbon, etc. to increase the absorption capacity for organic contaminants and tunable selectivity by favoring hydrophobic forces and ion-exchange interactions.

Likewise, the device 1 also includes an electrode arrangement 13 with one type or different types of electrodes that will act as sensors and/or as heating actuators. In the embodiment of Fig. 1 the electrodes are embedded within the three-dimensional ceramic porous structure 10, in particular following an interdigitated comb configuration in combination with a serpentine, whereas in Fig. 2 the electrodes are disposed following a sandwich configuration.

The oxidative thermal process will be performed using the electrodes that act as heating actuators, producing a step-wise increase in temperature between 100-700ºC, or even to higher temperature ranges, for instance up to 900ºC or 1000ºC in some cases; thus enabling decomposition of any adsorbed contaminant and the restoration of the initial retention characteristics of the nanostructure. The same or a complementary set of electrodes will allow performing real-time electrical measurements, particularly, electrical impedance spectroscopy (EIS) measurements, to control the total deposited contaminant load and monitoring the thermal cycles effect on it. Optical measurements can be also performed, to increase the detection level of the device 1.

The captured contaminants will change the permittivity and conductivity of the three-dimensional porous structure 10, producing additional resistive and capacitive effects in the measured impedance spectrum which will generate specific patterns. The water content will also produce changes. During the heating process, the water content will be lost and the different contaminant materials will degrade and change their electrical properties, so the impedance patterns will change. The relative permittivity of OMP, plastics or microbial pathogens is small (2-4) and the mass of contaminants captured with the micro- nano-structured material will be low. So the ability to detect them by absolute measurements of EIS will not be high. The possible interferences (water content, conductivity change, temperature change) will probably induce higher changes than the amount of microplastics or contaminants. So, the detection of these materials will not be based on absolute measurements but in the patterns the EIS measurements will display along the drying and thermal processes time course. The change in the relative volume of water/microplastics along the drying process and the degradation of OMP, microplastics and pathogens along the thermal process will generate changes in the resistive and capacitive components of the impedance detected by the electrodes. Both parametric model fitting of the obtained spectrograms and Artificial Intelligence (Al) analysis will be good candidates to correlate these time-frequency patterns with the composition of the retained materials.

With reference now to Fig. 4, therein an embodiment of the fabrication method of the proposed device 1 is graphically and schematically illustrated. According to this embodiment, the first step is the fabrication of the electrode arrangement 13. In this particular case, such fabrication involves the development of a serpentine interdigitated configuration; not limitative because other electrode configurations are also possible. The electrodes can be processed using photolithographic, printed-circuit board (PCB) or stencil tools, in combination with electroplating when necessary. In some embodiments, the electrode arrangement 13 can be built onto a temperature-resistant support (not shown), for instance made of ceramic material, quartz, silicon, etc.

Then, the creation of the three-dimensional porous structure 10 is carried out. In particular, this comprises the deposition of a colloidal solution of polystyrene (or other similar material) micro or nanoparticles 5, mixed with the chosen sorbents 12, of the desired size (from tenths of nanometers to hundreds of micrometers, preferably from 10 nm to 1000 micrometers. Some examples of deposition techniques that can be used are spin-on coating, dip-coating and electrospray, among others. The deposition technique leads to a three-dimensional ordered matrix of nanoparticles, that will create the three-dimensional porous structure 10. The area and thickness of the deposited layers can range from cm² to tenths of cm², preferably from 0.1 cm² to 100 cm², for the area, and from some microns up to millimeters, preferably from 1 micron to 10 millimeters, for the thickness. A multilayer configuration is possible, mixing different nano-micro sphere sizes and shapes.

Next, the method comprises the deposition of a ceramic material 14 such as alumina, titania, Zinc oxide, or combinations thereof, by atomic layer deposition. The deposited ceramic layer will be in the order of tens of nanometers with this technique. Combinations with other deposition techniques such as sputtering of other materials is also possible. For instance when is necessary to increase the thickness.

Finally, incineration of the polystyrene micro or nanoparticles 5 is executed, resulting in the cited air voids 11. The preexistent sorbents 12 will remain in the three-dimensional porous structure 10.

In some embodiments, other electrodes can be deposited on top of the three-dimensional porous structure 10.

The three-dimensional porous structure 10 can be designed to have variable pore size. To do this a multiplayer deposition of the polystyrene micro or nanoparticles 5 is made. The different sized polystyrene micro or nanoparticles 5 can be stacked in an ordered way or a colloidal mixture of different sizes can be made, creating a multi pore size variation. For instance, a first approach can be to make a multiplayer deposition with smaller pore size on the bottom and increased pored size on the surface.

Following, some examples of the proposed device for retaining and eliminating contaminants from water and indoor air are detailed. Nevertheless, the invention should not be limited to these particular examples as alternative configurations of the proposed device are likewise possible.

### Example 1:

In this first example, Al₂O₃ is used as ceramic material (50 µm thickness on a quartz substrate/support) with 425 nm voids, and Oasis HLB is used as adsorbent. Per- and polyfluoroalkyl substances (PFAS) can be captured and thermally degraded by applying a temperature of 450ºC through 50 µm interdigitated electrodes.

### Example 2:

In this second example, Al₂O₃ is used as ceramic material (100 µm thickness on a silica substrate/support) with 0.1 µm voids, with a modified surface containing micro-spikes that have the function to physically retain microplastic fibers and fragments. Electrostatic attraction, microplastic particles and fibers (polyethylene, polypropylene, polyamide, polystyrene, polycarbonate of 0.1-5000 µm size) can be captured and destroyed by applying a temperature of 600ºC through 200 µm serpentine electrodes.

### Example 3:

In this third example, Al₂O₃ is used as ceramic material (100 µm thickness on a quartz substrate/support) with 0.1 µm voids, and chitosan is used as sorbent. Air and water microbial pathogens (*Shigella, Escherichia coli, Vibrio, Salmonella, Legionella,* and viral pathogens) can be retained and destroyed by applying a temperature of 120°C through 100 µm serpentine electrodes.

The scope of the present invention is defined in the following set of claims.

## Claims

1. A device for water and air decontamination and disinfection, the device comprising:
a three-dimensional porous structure (10) made of ceramic material (14) and having a tuned topology comprising air voids (11) of a given size and arranged following a given distribution;
one or more sorbents (12) embedded within the three-dimensional porous structure (10) and adapted to chemically functionalize the three-dimensional porous structure (10); and
an electrode arrangement (13) comprising one or more types of electrodes, the electrode arrangement (13) being configured to operate as a sensor to perform real-time electrical measurements on the contaminants absorbed by the three-dimensional porous structure (10) and to operate as a heater to apply a thermal process to the contaminants absorbed by the three-dimensional porous structure (10).

2. The device of claim 1, wherein the electrode arrangement (13) is disposed embedded within the three-dimensional structure (10) following an interdigitated comb configuration in combination with a serpentine.

3. The device of claim 1, wherein the electrode arrangement (13) is disposed on at least two surfaces of the three-dimensional porous structure (10) following a sandwich configuration.

4. The device of any one of the previous claims, wherein the electrodes are made of a temperature-resistant metal material including nickel, copper or alloys thereof.

5. The device of any one of the previous claims, wherein the air voids (12) comprise different pore volumes, surface area and dimensions.

6. The device of any one of the previous claims, wherein the air voids (12) are of micro and/or nano size.

7. The device of any one of the previous claims, wherein the air voids (12) are periodically distributed along the three-dimensional porous structure (10) following an ordered arrangement.

8. The device of any one of the previous claims, wherein the ceramic material (14) is selected from the group consisting of: Aluminum Oxide, Titanium Oxide, Zinc Oxide, Zirconia, Silicone Dioxide or Carbide, or combinations thereof.

9. The device of any one of the previous claims, wherein the real-time electrical measurements comprise real-time electrical impedance spectroscopy, EIS, measurements.

10. The device of any one of the previous claims, wherein the sorbents comprise different retention properties among them.

11. The device of any one of the previous claims, wherein the one or more sorbents (12) is/are selected from the group consisting of:
reverse phase polymeric sorbents including hydrophilic-lipophilic-balanced N-vinylpyrrolidone and divinylbenzene; polymerically bonded, octadecyl (18% C); monomerically bonded, cyanopropyl (7% C);
mixed-mode polymeric sorbents including strong cation exchange, SCX; strong anion exchange, SAX; weak cation exchange, WCX; weak anion exchange, WAX;
strong anion exchange or quaternary amines, chitosan, or graphene.

12. The device of any one of the previous claims, wherein the three-dimensional porous structure (10) is configured to form surface spike configurations.

13. The device of any one of the previous claims, further comprising a temperature-resistant support configured to sustain the three-dimensional porous structure (10).
